**Europäisches Patentamt**

**European Patent Office**

**Office européen des brevets**

(19)

(11) Veröffentlichungsnummer: **0 236 966**
**B1**

(12)

# EUROPÄISCHE PATENTSCHRIFT

(45) Veröffentlichungstag der Patentschrift:
09.08.89

(51) Int. Cl.⁴: **B65H 31/20**

(21) Anmeldenummer: 87103181.1

(22) Anmeldetag: 06.03.87

(54) Ablagefach für eine Belegverarbeitungseinrichtung zur Ablage von Belegen unterschiedlicher Grösse.

(30) Priorität: 11.03.86 DE 8606645 U

(43) Veröffentlichungstag der Anmeldung:
16.09.87 Patentblatt 87/38

(45) Bekanntmachung des Hinweises auf die Patenterteilung:
09.08.89 Patentblatt 89/32

(84) Benannte Vertragsstaaten:
AT BE CH DE ES FR GB IT LI NL SE

(56) Entgegenhaltungen:
DE-A- 2 847 837

(73) Patentinhaber: COMPUTER GESELLSCHAFT
KONSTANZ MBH, Max-Stromeyer-Strasse 116,
D-7750 Konstanz(DE)

(72) Erfinder: Koutoudis, Konstantin, Dipl.-Ing. (FH),
Silvanerweg 3, D-7750 Konstanz(DE)
Erfinder: Reisacher, Günter, Dipl.-Ing. (FH),
Felchengang 17, D-7750 Konstanz(DE)
Erfinder: Wurster, Dieter, Dipl.-Ing. (FH), Seestrasse 73,
D-7760 Radolfzell(DE)

(74) Vertreter: Mehl, Ernst, Dipl.-Ing. et al, Postfach 22 13 17,
D-8000 München 22(DE)

## Beschreibung

Die Erfindungbetrifft ein Ablagefach nach den Merkmalen des Oberbegriffs des Anspruchs 1.

Angesichts der Vielfalt von Belegformaten und Beleggrößen sind Belegverarbeitungseinrichtungen, beispielsweise Formularlesegeräte vielfach bereits so universell konzipiert, daß eine Verarbeitung unterschiedlicher Belege ohne besondere Vorkehrungen problemlos durchführbar ist. Insbesondere die Ein- und Ausgabefächer sind zweckmäßig so gestaltet, daß sie durch leicht verstellbare Anschläge an unterschiedliche Beleggrößen angepaßt werden können.

Der vorliegenden Erfindung liegt nun die Aufgabe zugrunde, ein Ablagefach zu schaffen, das in bezug auf die Ablage unterschiedlich großer Belege eine möglichst große Variationsbreite bietet.

Die Lösung dieser Aufgabe ergibt sich erfindungsgemäß durch die kennzeichnenden Merkmale des Anspruchs 1. Der Vorteil dieses Ablagefaches mit den beiden ineinandergreifend angeordneten Schiebern besteht darin, daß ausgehend von einer mittleren Beleggröße durch Herausziehen des ersten Schiebers eine stufenlose Anpassung an größer Belegformate und bei eingeschobenem ersten Schieber durch zusätzliches Einschieben des zweiten Schiebers eine ebenfalls stufenlose Anpassung an kleinere Belegformate erreichbar ist.

Vorteilhafte Weiterbildungen der Erfindungsind in den Unteransprüchen angegeben.

Im folgenden wird ein Ausführungsbeispiel der Erfindung anhand der Zeichnung näher erläutert.

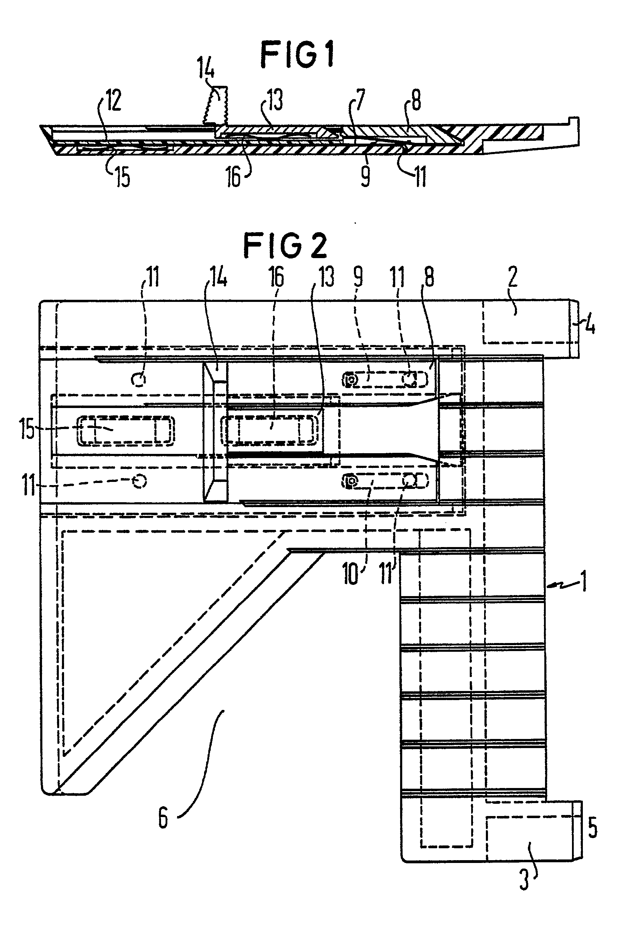

Die Figuren 1 und 2 zeigen in einer geschnittenen Seitenansicht und in einer Draufsicht ein Ablagefach 1, das mit Hilfe zweier keilförmig zulaufender Ansatzstücke 2, 3 in eine Gehäuseöffnung einer Belegverarbeitungseinrichtung, beispielsweise für ein Formularlesegerät, eingehängt und durch hintergreifende Anschlagleisten 4, 5 gehalten wird. Das Ablagefach 1 hat eine im wesentlichen rechteckige Form mit einem an einer Längsseite vorgesehenen beispielsweise trapezförmigen Ausschnitt 6. Dieser Ausschnitt 6 erleichtert die Entnahme der Belege insofern, als die Belege im Bereich des Ausschnitts 6 sowohl von oben als auch von unten erfaßt werden können. Der Ausschnitt 6 reicht dabei so weit nach innen, daß auch Belege kleineren Formats beidseitig gefaßt werden können. Die Aussparung dient außerdem als Sichtfenster. Bei mehreren übereinander angeordneten Ablagefächern kann nämlich in der darunter befindlichen Ablagefächern leicht festgestellt werden, ob dort Belege abgelegt sind. Zur Anpassung an unterschiedliche Beleggrößen ist ein in einer Längsnut 7 des Ablagefaches 1 schlittenartig geführter erster Schieber 8 vorgesehen, der bei der Ablage größerer Belege aus dem Ablagefach 1 stufenlos herausgezogen werden kann. Deser erste Schieber 8 ist zum Beispiel schwalbenschwanzartig geführt und weist am eingeschobenen Ende zwei Rastfedern 9, 10 auf, die in beiden Einstellungen des Schiebers 8 in entsprechend ausgeformte Rastpunkte 11 in der Längsnut 7 eingreifen. Auf der Oberseite des ersten Schiebers 8 ist eine weitere Längsnut 12 vorgesehen, in der ein zweiter Schieber 13 geführt ist. Am hinteren Ende dieses zweiten Schiebers 13 ist ein Anschlagwinkel 14 angebracht. Die Zeichnung zeigt den gegenüber dem ersten Schieber 8 stufenlos verstellbaren zweiten Schieber 13 in der inneren Endstellung, die bei der Ablage von kleinen Belegen in Betracht kommt. Das Ablagefach 1 mit den beiden Schiebern 8, 13 ist somit auf beliebige Beleggrößen zwischen DIN A4 und DIN A7 einstellbar. Die Länge des Ablagefachs 1 entspricht aber nur der halben Länge des größten zu verarbeitenden Beleges, so daß es in seinen Abmessungen in etwa einem DIN A5-Format gleichkommt. An der Unterseite der beiden Schieber 8, 13 sind wellenförmig gebogene, als Bremsfedern wirkende Blattfedern 15, 16 vorgesehen, die in flachen Federwannen in der Längsnut 7 des Ablagefachs 1 bzw. an der Unterseite des zweiten Schiebers 13 angeordnet sind. Die Deckflächen der beiden Schieber 8, 13 verlaufen im übrigen bündig zu den Deckflächen des Ablagefaches 1, so daß sich insgesamt eine ebene Auflagefläche ergibt.

## Patentansprüche

1. Ablagefach für eine Belegverarbeitungseinrichtung zur Ablage von Belegen unterschiedlicher Größe, unter Verwendung eines auf die jeweilige Beleggröße einstellbaren, am Ablagefach verschiebbar angeordneten Anschlagwinkels, **gekennzeichnet** durch einen ersten Schieber (8) der in einer im Ablagefach (1) vorgesehenen einseitig offenen Längsnut (7) schlittenartig geführt ist, durch einen in einer Längsnut des ersten Schiebers (8) schlittenartig geführten zweiten Schieber (13) mit aufgesetztem Anschlagwinklel (14) und durch eine Ausbildung beider Schieber in der Weise, daß die Deckflächen von Ablagefach und erstem Schieber bzw. erstem und zweitem Schieber bündig ineinander übergehen.

2. Ablagefach nach Anspruch 1, **dadurch gekennzeichnet,** daß zwischen Ablagefach (1) und erstem Schieber (8) bzw. zwischen erstem und zweitem Schieber (8, 13) je eine vorgespannte Bremsfeder (15, 16) vorgesehen ist.

3. Ablagefach nach Anspruch 2, **dadurch gekennzeichnet,** daß die Bremsfeder (15, 16) als wellenförmig gebogene Blattfeder ausgebildet und in einer der Länge der Blattfeder angepaßten flachen Federwanne eingebettet ist.

4. Ablagefach nach einem der vorhergehenden Ansprüche, **dadurch gekennzeichnet,** daß am ersten Schieber (18) wenigstens eine Rastfeder (9, 10) vorgesehen ist und daß die dem ersten Schieber (8) zugeordnete Längsnut (7) in beiden Endstellungen des ersten Schiebers (8) entsprechen ausgeformte Rastpunkte (11) aufweist.

## Claims

1. Tray for a document processing device for the depositing of documents of different sizes using a stop angle which can be set to the respective document size and is arranged displaceable on the tray, characterized by a first pusher (8), which is guided in the manner of a slide in a longitudinal groove (7) provided in the tray (1) and open on one side, by a second pusher (13), which is guided in the manner of a slide in a longitudinal groove of the first pusher (8) and has stop angle (14) mounted on it, and by a design of the two pushers such that the top surfaces of tray and first pusher or first and second pusher merge flush with each other.

2. Tray according to Claim 1, characterized in that there is a pretensioned braking spring (15, 16) provided in each case between tray (1) and first pusher (8) and between first and second pusher (8, 13).

3. Tray according to Claim 2, characterized in that the braking spring (15, 16) is designed as a leaf spring bent in a corrugated form and is embedded in a flat spring receptacle matching the length of the leaf spring.

4. Tray according to one of the preceding claims, characterized in that there is at least one stop spring (9, 10) provided on the first pusher (18) and in that the longitudinal groove (7) assigned to the first pusher (8) has correspondingly recessed stop locations (11) in both end positions of the first pusher (8).

**Revendications**

1. Casier récepteur pour un dispositif de traitement de documents, servant à recevoir des documents possédant des tailles différentes, et comportant une cornière de butée, qui est réglable sur la taille respective des documents et est montée de manière à être déplaçable dans le casier récepteur, caractérisé par un premier tiroir (8), qui est guidé à la manière d'un coulisseau dans une rainure longitudinale (7) ouverte d'un côté et prévue dans le casier récepteur (1), par un second tiroir (13), qui est guidé à la manière d'un coulisseau dans une rainure longitudinale du premier tiroir (8) et sur lequel est montée une cornière de butée (14), et par un agencement tel des deux tiroirs que les surfaces de recouvrement du casier récepteur et du premier tiroir ou des premier et second tiroirs se rejoignent en étant de niveau.

2. Casier récepteur suivant la revendication 1, caractérisé par le fait qu'un ressort de frein précontraint (15, 16) est prévu respectivement entre le casier récepteur (1) et le premier tiroir (8) ou entre les premier et second tiroirs (8, 13).

3. Casier récepteur suivant la revendication 2, caractérisé par le fait que le ressort de frein (15, 16) est réalisé sous la forme d'un ressort en forme de lame, recourbé avec une forme ondulée, et est inséré dans une cuvette plate adaptée à la longueur du ressort en forme de lame.

4. Casier récepteur suivant l'une des revendications précédentes, caractérisé par le fait qu'au moins un ressort d'encliquetage (9, 10) est prévu sur le premier tiroir (8) et que la rainure longitudinale (7) associée au premier tiroir (8) comporte des points d'encliquetage (11) ménagés de manière à correspondre aux deux positions d'extrémité du premier tiroir (8).

# FIG 1

# FIG 2